# EUROPÄISCHE PATENTSCHRIFT

(11) **EP 2 723 547 B1**
(45) Veröffentlichungstag und Bekanntmachung des Hinweises auf die Patenterteilung: **06.01.2016**
(21) Anmeldenummer: 12728284.6
(22) Anmeldetag: 19.06.2012
(51) Int. Cl.: B29C 47/68, B29C 47/08

(54) **FILTRIERVORRICHTUNG FÜR FLUIDE**
FILTERING DEVICE FOR FLUIDS
DISPOSITIF DE FILTRAGE POUR FLUIDES

(30) Priorität: 27.06.2011 DE 102011051373
(43) Veröffentlichungstag der Anmeldung: 30.04.2014
(73) Patentinhaber: Nordson Holdings S.à r.l. & Co. KG, 40699 Erkrath (DE)
(72) Erfinder: MIDDLER, Robert, 48329 Havixbeck (DE); WÖSTMANN, Stefan, 48336 Sassenberg (DE)
(74) Vertreter: Eisenführ Speiser
(86) Internationale Anmeldenummer: PCT/EP2012/061755
(87) Internationale Veröffentlichungsnummer: WO 2013/000772

(56) Entgegenhaltungen:
- EP-A1- 0 250 695
- WO-A2-02/16113
- DE-A1- 19 800 744
- DE-C1- 19 500 060
- US-A- 5 578 206

## Beschreibung

Die Erfindung betrifft eine Filtriervorrichtung für Fluide, mit den Merkmalen des Oberbegriffs des Anspruchs 1.

Solche Filtriervorrichtungen werden insbesondere zur Filtration von polymeren Schmelzen und Flüssigkeiten eingesetzt. Das Fluid wird durch Siebräume geleitet, die jeweils wenigstens ein Filterelement aufweisen, welches im Fluid enthaltenen Schmutz, Fremdkörper oder Konglomerate abscheidet. Ist das Filterelement verschmutzt, muss es ausgetauscht werden, wozu das in einer Bohrung im Gehäuse verschiebbar gelagerte Siebträgerelement in eine Siebwechselposition verschoben werden kann.

Aus der DE 102 54 022 A1 ist eine Filtriervorrichtung bekannt, die zwei Siebträgerelemente mit jeweils zwei Siebstellen aufweist. Wird das eine Siebträgerelement in eine Wartungsposition gefahren, um den Siebraum und das Filterelement zu reinigen, so stehen die Siebe des anderen Siebträgerelements für die Filtration zur Verfügung. Durch eine geschickte Führung der Ein- und Austrittskanäle im Gehäuse kann sogar an dem in der Wartungsposition befindlichen Siebträgerelement eine Filtration über den gerade nicht gewarteten Siebraum erfolgen, so dass ständig wenigstens 75% der Filterfläche zur Verfügung stehen während eine Rückspülung des anderen Filterelements erfolgen, indem von der Reinseite Fluid durch dieses geleitet wird, das dann mitsamt den anhaftenden Verschmutzungen über einen Rückspülkanal nach außen abgeführt wird.

Um den mit der Filtriervorrichtung erzielbaren Durchsatz, also das filtrierbare Fluidvolumen pro Zeit, zu steigern, muss üblicherweise die Filterfläche erhöht werden. Dazu gibt es die Möglichkeit einer größeren Baugröße der gesamten Filtriervorrichtung, die jedoch zu einer starken Kostensteigerung führt. Zudem gibt es Ansätze, Filtereinheiten zu verwenden, durch die über gestapelte Filterscheiben bei gleicher Öffnungsfläche des Siebraums größere Filterflächen zur Verfügung gestellt werden können. Die letztgenannten Einheiten eignen sich aber nicht für alle zu filtrierenden Medien.

Die WO 02/16113 A2 beschreibt eine Filtriervorrichtung mit jeweils zwei Paaren von Siebräumen an diametral gegenüberliegenden Seiten eines Siebträgerelements. Hierdurch kann die Filterfläche und damit der Durchsatz verdoppelt werden. Indem die zusätzlichen Siebräume nicht einfach linear hintereinander am Siebträgerelement anordnet sind, sondern gegenüberliegend, besteht die Möglichkeit, das Siebträgerelement zur einen oder zur anderen Seite in eine Wartungsposition zu verfahren.

Ein weiteres Problem stellt die Verarbeitung empfindlicher Fluide dar, die sich bei längeren Verweilzeiten chemisch verändern, insbesondere wenn sie in den Spalt zwischen Siebträgerelement und Bohrung im Gehäuse gelangen. Beispielsweise besteht bei der Verarbeitung von sogenannter Spinnmasse zur Herstellung von Kunstfasern sogar die Gefahr von Explosionen, wenn Reste des Fluids so lange lokal stagnieren, dass sie mit aus der Filtervorrichtung gelösten Eisenatomen reagieren können. In der EP 915 729 B1 wird dazu vorgeschlagen, Siebträger und Gehäusebohrung so aufeinander abzustimmen, dass ein durchströmbarer Spalt dazwischen ausgebildet ist. Um zu gewährleisten, dass der Siebträger zentral in der Bohrung angeordnet bleibt und nicht durch den Staudruck einseitig an die Seite des Austrittskanals gedrückt wird, werden gesonderte Abstandshalterelemente am Siebträgerelement vorgesehen.

Die DE 198 00 744 A1 beschreibt eine zur Verarbeitung von Spinnmasse geeignete Filtriervorrichtung, bei der ohne Abstandshalter ein ständig durchflossener Ringspalt vorgesehen ist. Bei Wartungsarbeiten an einem der Filterelemente fällt jedoch der gesamte Produktionsbetrieb über den Siebträger, der das Filterelement trägt, aus.

Somit stellt sich die erste Aufgabe, bei einer Filtriervorrichtung der eingangs genannten Art zum einen den Durchsatz beim Rückspülen zu erhöhen, sowie als weitere Aufgabe auch, das Siebträgerelement ohne Abstandshalterelemente in der Waage halten zu können und dabei insbesondere auch lokale Verweilzeiten von Fluidanteilen zu verringern, so dass die Eignung gegeben ist, bedarfsweise Spinnmassen verarbeiten zu können.

Diese Aufgabe wird durch eine Filtriervorrichtung mit den Merkmalen des Anspruchs 1 gelöst.

Wenn das Siebträgerelement zur einen oder zur anderen Seite in eine Wartungsposition verfahren wird, werden erfindungsgemäß nicht mehrere Siebräume vom Produktionsstrom getrennt werden, sondern nur einzelne.

Möglich wird dies gemäß der Erfindung dadurch, dass die Siebräume ohne Verbindung innerhalb des Siebträgerelements ausgebildet sind, sowie durch die besondere Führung der Kanäle, über welche das Fluid wieder abgeführt wird:
Zwischen den Austrittskanälen im Gehäuse und den Siebräumen ist jeweils wenigstens ein sich in Richtung der Längsachse des Siebträgerelements erstreckender Zwischenkanal vorgesehen, wobei bei jedem Paar von Siebräumen mindestens zwei Zwischenkanäle unterschiedlicher Länge vorgesehen sind, die sich in Richtung der Längsachse der Siebträgerelemente erstrecken und über welche:
   - in einer Produktionsstellung des Siebträgerelements jeweils beide Siebräume eines Paares mit den Eintrittskanälen und den Austrittskanälen verbunden sind und
   - in unterschiedlichen axialen Wartungspositionen des Siebträgerelements im Gehäuse wechselseitig eine Verbindung des einen oder des anderen Siebraums des Paars mit wenigstens einem Austrittskanal herstellbar ist.

Diese Zwischenkanäle verlängern am Übergang vom Siebträgerelement ins Gehäuse die Austrittskanäle und zwar deren Anteil im Gehäuse selbst und/oder den Teil, der im Siebträgerelement vom Außenmantel in den eigentlichen Siebraum führt.

Es können auch am Außenmantel des Siebträgerelements und gleichzeitig an der Innenwandung der Bohrung im Gehäuse für das Siebträgerelement solche Zwischenkanäle ausgebildet sein. Wesentlich ist nur, dass es zwischen dem siebträgerelementseitigen Zwischenkanal und dem gehäuseseitigen Zwischenkanal mehr als eine Position mit einer Überdeckung und mit einem offenen Austrittskanal gibt:
Neben einer normalen Produktionsstellung, in der der Austrittskanal an beiden Siebräumen eines Paares offen ist, gibt es für beide Siebräume jeweils wenigstens eine Wartungsposition, an der der Austrittskanal nur für den einen, nicht aber für den anderen Siebraum des Paares geöffnet ist.

Um dies zu erreichen, kann über einen bestimmten Verschiebeweg des Siebträgerelementes eine kontinuierliche Überdeckung bestehen. Es reichen aber auch punktuelle Überdeckungen an den jeweiligen relevanten axialen Positionen. Demzufolge können die Zwischenkanäle nicht nur durch langlochförmige Nuten gebildet sein, sondern z.B. auch durch Reihen von Bohrungen.

Bevorzugt sind im Gehäuse zwei Siebträgerelemente angeordnet und an jedem Siebträgerelement sind zwei Paare von Siebräumen vorgesehen. Damit stehen bei der Filtriervorrichtung insgesamt acht Siebräume für den normalen Produktionsbetrieb zur Verfügung, von denen je nach weiterer Bauart, die im Folgenden noch beschrieben werden wird, 50% oder 75% auch in den Wartungspositionen zur Aufrechterhaltung der Filtrierung zur Verfügung stehen.

Die erfindungsgemäße Anordnung hat jedoch nicht nur Vorteile in Bezug auf eine Erhöhung des Durchsatzvolumens, denn die Anordnung der Siebräume an gegenüberliegenden Seiten des Siebträgerelement hat auch vorteilhafte Wirkungen dadurch, dass die Siebräume von gegenüberliegenden Seiten angeströmt werden und das Fluid in Austrittskanälen wieder abfließt, welche um 90° zur Eintrittsebene angestellt sind..

Trotz engster Fertigungstoleranzen bleibt für niedrigviskose Flüssigkeiten ein durchströmbarer Spalt zwischen dem Außenmantel des Siebträgerelements und der Innenwandung der Bohrung, in der das Siebträgerelement geführt ist. Im Querschnitt und unter Verzerrung der tatsächlich gegeben Größen taumelt sinnbildlich gesprochen das Siebträgerelement, das im Querschnitt einen kleinen Kreis darstellt, innerhalb der Bohrung im Gehäuse, die im Querschnitt ein entsprechend größerer Kreis ist. Die aus dem Stand der Technik bekannte einseitige Anströmung drückt das Siebträgerelement an eine Seite der Bohrung. Es kommt dort im Bereich der Berührung zu einer partiellen Abdichtung, die ein schnelles Abfließen der Leckströme verhindert.

Dadurch, dass erfindungsgemäß die Anströmung von beiden Seiten erfolgt und der Druck in den Eintrittskanälen im Gehäuse allseitig gleich ist, weil diese untereinander verbunden sind, wird das Siebträgerelement in der Waage gehalten.

Dieser Effekt wird bei bevorzugten Ausführungsformen soweit erweitert, dass das Gleichgewicht sogar in mehreren Freiheitsgraden bestehen kann und am gesamtem Umfang jedes Siebträgerelements Gleichdruckbedingungen herrschen, so dass das Siebträgerelement quasi in der Schwebe innerhalb der Bohrung gehalten wird, und dass dabei nicht nur über den gesamten Umfang, sondern auch an allen axialen Positionen ein einheitliches Spaltmaß besteht. Dadurch können Leckströme schnell abfließen und daher sind die nachfolgend beschriebenen bevorzugten Ausführungsformen sogar für die Verarbeitung explosionsfähiger Spinnmasse geeignet:
Bevorzugt ist zur Herstellung von Gleichdruckbedingungen in der Querschnittsebene vorgesehen,
   - dass an gegenüberliegenden Seiten des Siebträgerelements jeweils wenigstens ein Eintrittskanal zu jedem Siebraum führt, wobei die Symmetrieachse der Gruppe von Eintrittskanälen bzw. deren Mündungsbereichen auf einer ersten Durchmesserlinie angeordnet ist, und
   - dass von jedem Siebraum je zwei Austrittskanäle zu gegenüberliegenden Seiten des Siebträgerelements führen, wobei die Symmetrieachse der Gruppe von Austrittskanälen auf einer zweiten Durchmesserlinie liegt, die senkrecht zur ersten Durchmesserlinie ist.

Dies bringt jeweils ein Druck- und Kräftegleichgewicht in der Ebene des einströmenden und des ausströmenden Fluids. Wenn beispielsweise die Eintrittsebene horizontal ist, dann ist die Austrittsebene senkrecht dazu.

Vorzugsweise fließt das Fluid gleichzeitig zu diametral gegenüberliegenden Seiten des Siebträgerelements ab, so dass auch in der zweiten Koordinate der Querschnittsebene ein Gleichgewicht hergestellt wird.

Weiterhin bevorzugt ist es, zwei Siebträgerelemente mit jeweils zwei Paaren von Siebräumen an jedem Siebträger vorzusehen, wobei insbesondere:
- die zu den Siebräumen führenden Mündungen von der Gruppe der zu den Siebräumen führenden Eintrittskanäle beider Paare spiegelsymmetrisch in Bezug auf eine erste Querachse des Gehäuses angeordnet sind,
- die jeweils längeren Zwischenkanäle und kürzeren Zwischenkanäle beider Paare auf unterschiedlichen Seiten einer ersten Querachse und zugleich abwechselnd auf unterschiedlichen Seiten einer Längsachse des Siebträgerelements angeordnet sind und
- die Verbindungslinien der Mittelpunkte der jeweils längeren Zwischenkanäle und der jeweils kürzeren Zwischenkanäle beider Paare sich im Schnittpunkt der ersten Querachse und der Längsachse schneiden.

Durch diese Anordnung sind alle Gruppen von gleichartigen Kanälen jeweils symmetrisch in Bezug auf gemeinsame Mittellinien ausgerichtet. Nicht nur Druckkräfte, die von außen auf das Siebträgerelement wirken, sind somit in der Querschnittsebene im Gleichgewicht. Auch werden die Kanäle, die nicht direkt auf die Mittelachse des Siebträgerelements gerichtet sind, durch eine paarweise und äquidistante Anordnung in Bezug auf die jeweilige Mittelachse in Waage gehalten. Asymmetrische Kräfteverhältnisse, die in einer Rotation des Siebträgerelements um die Mittelachse resultieren könnten, werden somit vermieden.

Bevorzugt ist weiterhin, dass die Längsachse des Siebträgerelements parallel zu einem Gewichtskraftvektor ausgerichtet ist. Es wird also eine hängende Anordnung gewählt, bei der das Siebträgerelement vertikal verfahren wird. Diese Ausrichtung eliminiert den Einfluss der Gewichtskraft auf die Lage des Siebträgerelements innerhalb der Bohrung im Gehäuse.

Die Erfindung wird nachfolgend mit Bezug auf die Zeichnung näher erläutert. Die Figuren zeigen im Einzelnen:
- Fig. 1A: eine Filtriervorrichtung gemäß einer ersten Ausführungsform in Produktionsstellung in einer ersten Längsschnittebene;
- Fig. 1B: die Filtriervorrichtung gemäß Figur 1A in einer zweiten Längsschnittebene;
- Fig. 2: die Filtriervorrichtung im Querschnitt;
- Fig. 3A: eine Filtriervorrichtung in Rückspülstellung in einer ersten Längsschnittebene;
- Fig. 3B: die Filtriervorrichtung gemäß Figur 3A in Rückspülstellung in einer zweiten Längsschnittebene;
- Fig. 4A: eine Filtriervorrichtung kurz vor oder nach der Rückspülstellung in einer ersten Längsschnittebene;
- Fig. 4B: die Filtriervorrichtung gemäß Figur 4A in einer zweiten Längsschnittebene und
- Fig. 5: die Filtriervorrichtung in einer Siebwechselstellung;
- Fig. 6A: eine Filtriervorrichtung gemäß einer zweiten Ausführungsform in Produktionsstellung in einer ersten Längsschnittebene ;
- Fig. 6B: die Filtriervorrichtung gemäß Figur 6A in einer zweiten Längsschnittebene;
- Fig. 7A: eine Filtriervorrichtung in Rückspülstellung in einer ersten Längsschnittebene;
- Fig. 7B: die Filtriervorrichtung gemäß Figur 7A in Rückspülstellung in einer zweiten Längsschnittebene;
- Fig. 8A: die Filtriervorrichtung in einer Siebwechselstellung in einer ersten Längsschnittebene;
- Fig. 8B: die Filtriervorrichtung gemäß Figur 7A in Rückspülstellung in einer zweiten Längsschnittebene; und
- Fig. 9: eine schematische perspektivischer Ansicht eines Siebträgerelements zur Kennzeichnung der Lage der Schnittebenen und der Bezugszeichenindizes.

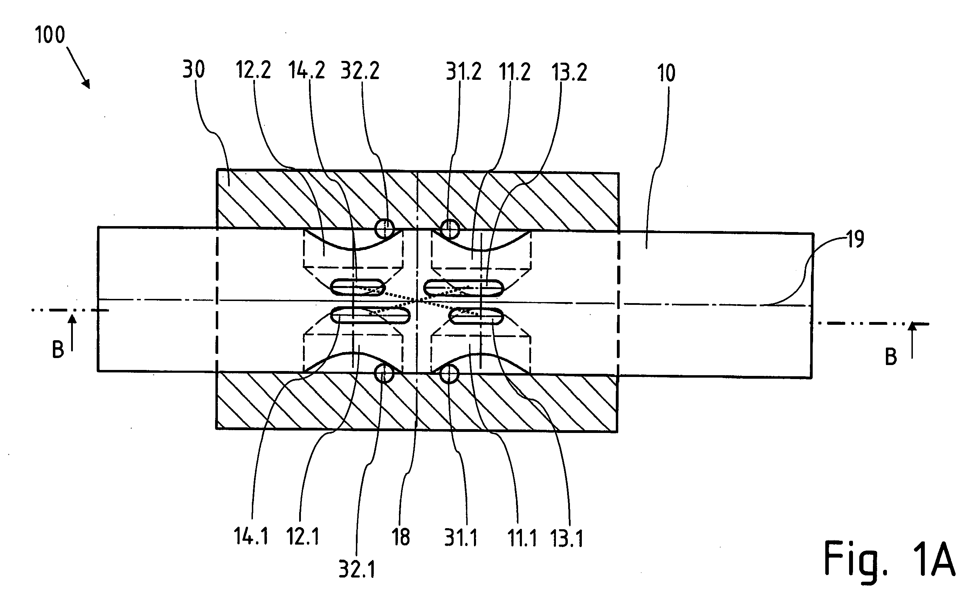

Figur 1A zeigt eine Filtriervorrichtung 100, die im Wesentlichen aus einem Gehäuse 30 und zwei in Bohrungen des Gehäuses verschiebbar geführten zylinderbolzenförmigen Siebträgerelementen 10 besteht, wie grundsätzlich bekannt. In allen Figuren ist jeweils nur ein Siebträgerelement 10 dargestellt; ein weiteres ist bei der realen Ausführungsform in einer Ebene darunter oder daneben angeordnet, so dass eine Filtrierung auch dann aufrecht erhalten werden kann, wenn sich eines der Siebträgerelemente in einer Wartungsstellung befindet.

Das Gehäuse 30 ist in Figur 1A geschnitten dargestellt. Die Ansicht geht von oben auf das in einer geschnittenen Gehäusebohrung liegende Siebträgerelement 10.

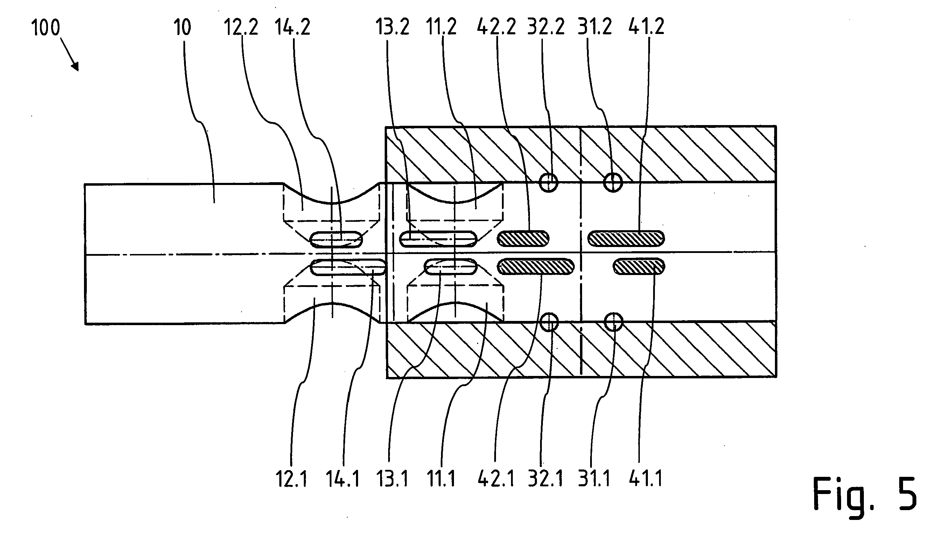

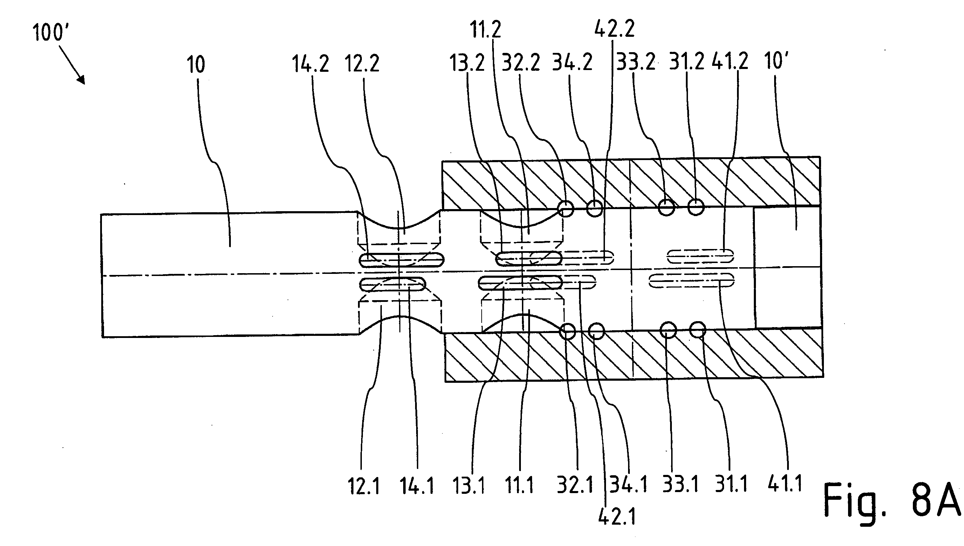

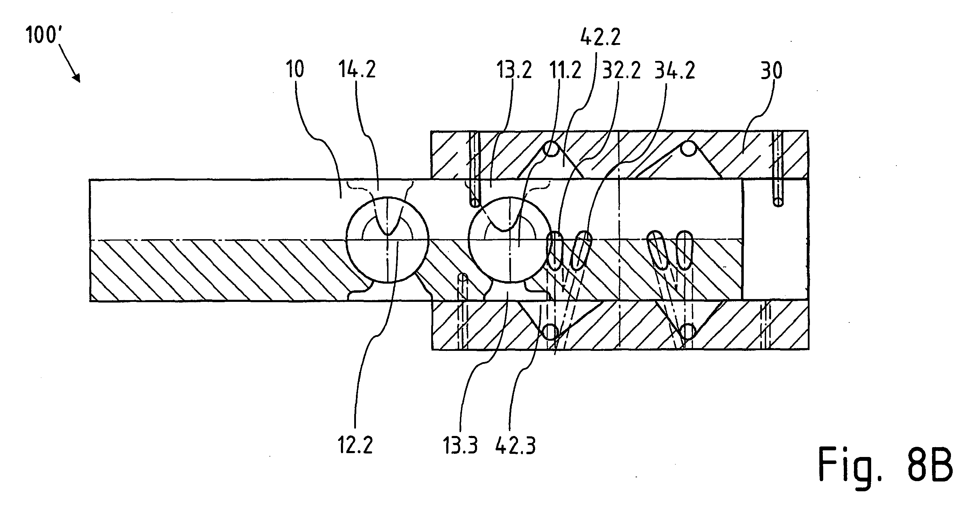

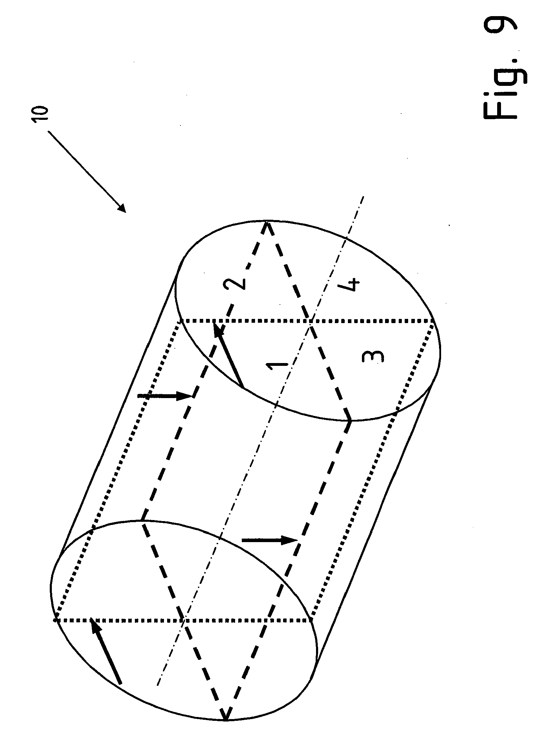

Fig. 9 kennzeichnet die Lagen der nachfolgend verwendeten Schnittebenen und die Verwendung der Indizes bei der nachfolgenden Beschreibung. In den Figuren, deren Nummer den Buchstaben "A" enthält sowie in den Figuren 5 und 8 liegt die Schnittebene so, wie durch das Rechteck in gestrichelten Linien angedeutet; der Blick geht also von oben auf diese Schnittebene.

In den Figuren, deren Nummer den Buchstaben "B" enthält, liegt die Schnittebene um 90° versetzt dazu, wie durch das Rechteck in punktierten Linien angedeutet; der Blick geht hier von links nach rechts auf die Schnittebene.

Die Ziffern auf der Stirnfläche kennzeichnen die jeweiligen Quadranten, welche durch die Unterteilung mit den beiden Schnittebenen gebildet werden. Sie sind nachfolgend als Indizes den jeweiligen Bezugszahlen nachgesetzt, um die Position gleichartiger Merkmale zu kennzeichnen. Die Bezeichnung "Siebräume 11.1, 12.1" etwa deutet auf Siebräume hin, die im ersten Quadranten gemäß der Darstellung in Figur 9 angeordnet sind, wohingegen beispielsweise "Siebräume 11.2, 12.2" daneben im zweiten Quadranten angeordnet sind.

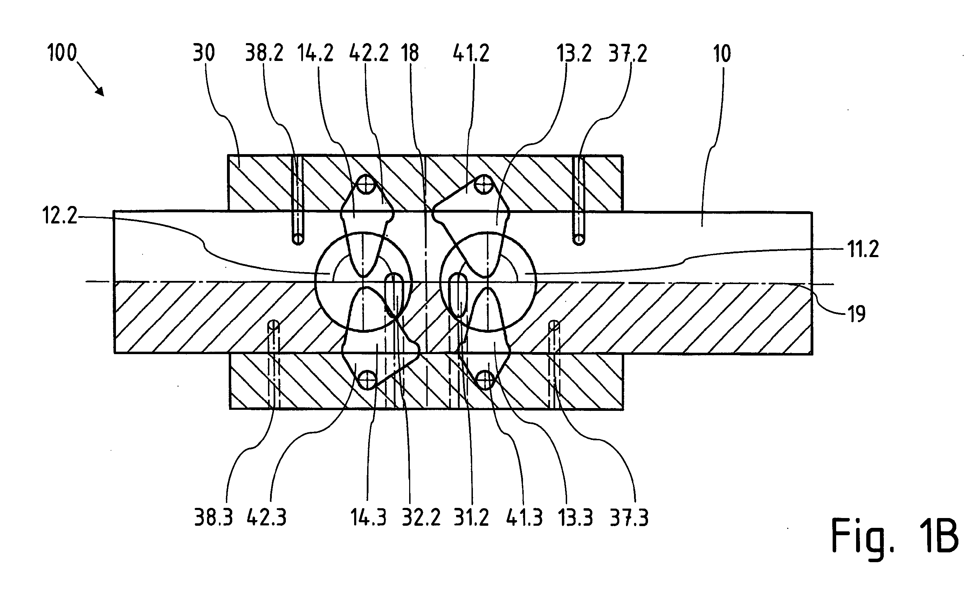

Das Ausführungsbeispiel nach Figur 1 stellt eine bevorzugte Ausführungsform der Erfindung dar, bei welcher Gleichdruckbedingungen herrschen, das heißt, das Siebträgerelement 10 wird in allen möglichen räumlichen Richtungen gegenüber dem Gehäuse 30 in Waage gehalten, um Winkelschiefstellungen und eine damit einhergehende Absperrung des durchströmbaren Ringspalts zwischen Siebträgerelement 10 und Gehäusebohrung als Fließweg für Leckageströmungen zu vermeiden.

Zur besseren Darstellung sind die Siebträgerelemente in den Figuren jeweils quer liegend gezeichnet. Um Gleichdruckbedingungen zu erzeugen, ist es jedoch vorteilhaft, im realen Betrieb die Filtriervorrichtung derart aufzustellen, dass die Längsachsen der Siebträgerelemente lotrecht ausgerichtet sind. Damit werden Einflüsse von Massenkräften neutralisiert und es wird somit eine entlang des Umfangs lokal unterschiedliche Ausbildung des Spaltes zwischen dem Siebträgerelement und dem Gehäuse vermieden.

Das Siebträgerelement 10 ist in Richtung einer Längsachse 19 gegenüber dem Gehäuse 30 verfahrbar.

Im dargestellten Ausführungsbeispiel sind zwei Paare von Siebräumen 11.1, 11.2 bzw. 12.1, 12.2 in das Siebträgerelement 10 eingearbeitet. Die beiden Siebräume 11.1, 11.2 bzw. 12.1, 12.2 jedes Paares liegen sich spiegelbildlich in Bezug auf die Längsachse 19 gegenüber. Die Paare von Siebräumen 11.1, 11.2 bzw. 12.1, 12.2 wiederum sind spiegelbildlich in Bezug auf eine Querachse 18 angeordnet. Die Querachse 18 muss nicht zwingend die Länge des Siebträgerelements 10 halbieren, sondern sie kann auch außermittig am Siebträgerelement 10 positioniert sein. Die Querachse 18 stellt eine Symmetrieachse in Bezug auf die Anordnung der Paare von Siebräumen 11.1, 11.2 bzw. 12.1, 12.2 dar.

Die Siebräume 11.1, 11.2 bzw. 12.1, 12.2 werden gespeist durch Eintrittskanäle 31.1, 31.2, 32.1, 32.2, die so durch das Gehäuse 30 führen, dass sie tangential auf das Siebträgerelement 10 zu laufen.

In der in Figur 1A gezeigten Produktionsstellung laufen die Enden der Eintrittskanäle 31.1, 31.2, 32.1, 32.2 in die Siebräume 11.1, 11.2, 12.1, 12.2, und zwar auf der Schmutzseite eines dort eingesetzten Filterelements. Die Eintrittskanäle 31.1, 31.2, 32.1, 32.2 besitzen jeweils den gleichen Abstand in Bezug auf eine Querachse 38 im Gehäuse, die eine Mittelachse der Anordnung von Siebräumen 11.1, 11.2 bzw. 12.1, 12.2 bildet und in einer Produktionsstellung deckungsgleich mit der Achse 18 des Siebträgerelements 10 liegt. An gegenüberliegenden Seiten des Siebträgerelements 10 liegen sich die Eintrittskanäle 31.1, 31.2, 32.1, 32.2 gegenüber. Diese Anordnung führt zu allseitig ausgewogenen Druck- und Kraftverhältnissen bei der Anströmung der Siebräume.

Erfindungswesentlich ist auch die Anordnung der Fließkanäle auf der Austrittsseite:
Am Siebträgerelement 10 selbst sind oberhalb jedes Siebraums 11.1, 11.2, 12.1, 12.2 Zwischenkanäle 13.1, 13.2, 14.1, 14.2 ausgebildet, die sich länglich in Richtung der Längsachse 19 ausdehnen.

Oberhalb und unterhalb der Längsachse 19 sind jeweils ein längerer Zwischenkanal 13.2, 14.1 und ein kürzerer Zwischenkanal 13.1, 14.2 angeordnet. In Bezug auf die Querachse 18 wiederum sind jeweils ein längerer Zwischenkanal 14.1 links und ein weiterer längerer Zwischenkanal 13.2 rechts angeordnet. Bei den kürzeren Zwischenkanälen 13.1, 14.2 liegt genau die umgekehrte Anordnung vor. Verbindet man die Mittelpunkte jeweils der längeren Zwischenkanäle 13.2, 14.1 und der kürzeren Zwischenkanäle 13.1, 14.2, so kreuzen sich diese Verbindungslinien, die durch die punktierten Linien in Figur 1A angedeutet sind, genau im Mittelpunkt der Anordnung der Siebräume 11.1, 11.2 bzw. 12.1, 12.2 und somit am Schnittpunkt von Längsachse 19 und Querachse 18.

Die Vorsehung längerer und kürzerer Zwischenkanäle ist notwendig, um die Siebräume 11.1, 11.2 bzw. 12.1, 12.2 in bestimmten Wartungsstellungen durchströmbar zu halten, worauf nachfolgend noch eingegangen werden wird. Durch die vorstehend beschriebene, punktsymmetrische Anordnung der Zwischenkanäle 13.1, 13.2, 14.1, 14.2 werden allseitig gleiche Kräfte auf das Siebträgerelement 10 in der Produktionsstellung gewährleistet.

Die gehäuseseitigen Austrittskanäle besitzen die gleiche Querschnittsform wie die Zwischenkanäle 13.1, 13.2, 14.1, 14.2 und liegen in der Produktionsstellung in Figur 1A genau oberhalb davon, so dass sie in Figur 1A nicht erkennbar sind.

Figur 1B zeigt die erfindungsgemäße Filtriervorrichtung 100 in einer um 90° versetzten Schnittebene, die durch die Linie B-B in Figur 1A gekennzeichnet ist.

Hierbei ist zum einen erkennbar, wie die gestrichelt dargestellten Eintrittskanäle 31.2, 32.2 im Gehäuse die Siebräume 11.2, 12.2 anschneiden; die langlochförmige Schnittzone ist jeweils in Volllinien dargestellt.

Weiterhin erkennbar sind Rückspülkanäle 38.2, 38.3, 37.2, 37.3, die durch das Gehäuse 30 bis an das Siebträgerelement 10 heran führen und die der Abfuhr von Fluid auf der Schmutzseite der Filterelemente dienen, wenn sich das Siebträgerelement 10 in der später noch gezeigten und beschriebenen Rückspülstellung befindet.

Schließlich wird aus der Darstellung nach Figur 1B die Ausbildung der Zwischenkanäle 13.2, 13.3, 14.2, 14.3 im Siebträgerelement 10 und der Austrittskanäle 41.2, 41.3, 42.2, 42.3 in der Innenwandung der Bohrung im Gehäuse 30 deutlich.

Eine punktsymmetrische Anordnung wird auch in dieser Schnittebene erreicht: die Anordnung von Zwischenkanälen 13.2, 14.2 auf der in Figur 1B oben liegenden Seite des Siebträgerelements 10 wiederholt sich unten mit den Zwischenkanälen 13.3, 14.3, wobei allerdings lange und kurze Zwischenkanälen auch in dieser Ansicht abwechselnd auf gegenüber liegenden Seiten einer Querachse 18 angeordnet sind. Wo also oben die Folge "lang-kurz" ist, ist sie unten "kurz-lang".

Die Zwischenkanäle 13.2, 13.3, 14.2, 14.3 beginnen etwa auf halber Höhe der Siebräume 11.2, 12.2 und weiten sich bis zur Oberseite des Siebträgerelements 10 auf, so dass sie außen am Siebträgerelement 10 als Langloch erscheinen (vgl. Fig. 1A).

Komplementär dazu sind in der Kontaktzone zwischen Siebträgerelement 10 und Gehäusebohrung die Austrittskanäle 41.2, 41.3, 42.2, 42.3 ausgebildet. Vor dort aus verjüngen sie sich und münden dann im dargstellten Ausführungsbeispiel einer Filtriervorrichtung 100 in zylindrischen Bohrungen, die aus dem Gehäuse 30 heraus führen.

Wie oben bereits gesagt, liegen die Austrittskanäle 41.1, 41.2, 41.3, 42.1, 42.2, 42.3 in der Produktionsstellung gemäß den Figuren 1A und 1B den Zwischenkanälen 13.1, 13.2, 14.1, 14.2 im Siebträgerelement 10 deckungsgleich gegenüber.

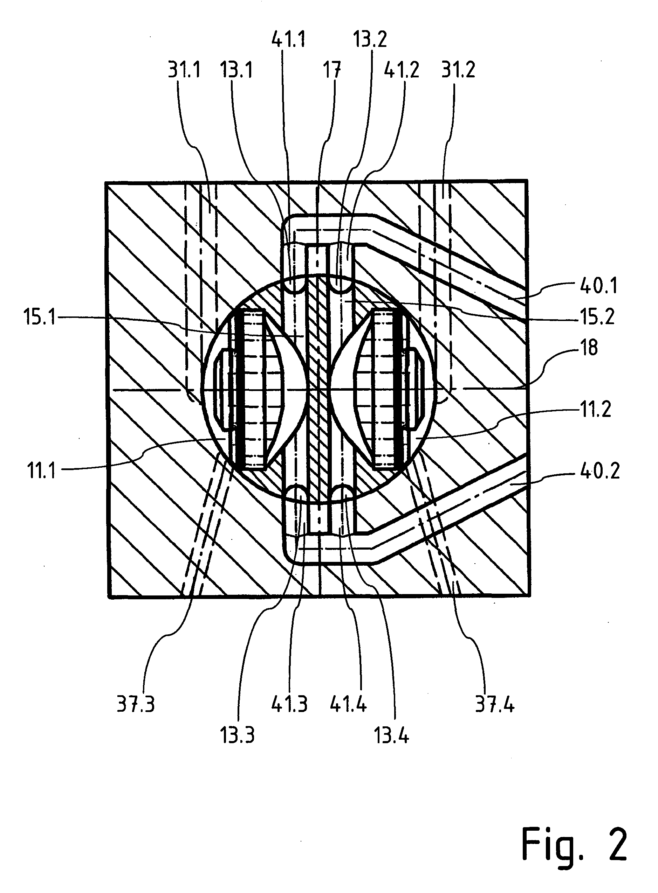

Figur 2 zeigt einen Querschnitt durch die Filtriervorrichtung 100 in einer zur Querachse 18 parallelen Schnittebene. Die Strömung des Fluids ist hieran gut nachvollziehbar:
Das Fluid strömt durch die Eintrittskanäle 31.1, 31.2 durch das Gehäuse 30 und tritt in die Siebräume 11.1, 11.2 ein, wo es die an sich bekannten Filterelemente, die z.B. als mit Metallgeflechten abgedeckte Lochbleche ausgebildet sein können, durchströmt.

Im Siebträgerelement 10 in Fließrichtung gesehen hinter den Filterelementen fließt das Fluid in Sammlerkanäle 15.1, 15.2, die sich quer zur Einströmrichtung erstrecken und die oben und unten jeweils in den paarweise parallelen, aber paarweise nicht gleich langen Zwischenkanälen 13.1 ... 13.4 münden, welche in den Mantel des Siebträgerelements 10 eingebracht sind.

Gehäuseseitig liegen den Zwischenkanälen 13.1 ... 13.4 die Austrittskanäle 41.1 ... 41.4 gegenüber, die sich tiefer im Gehäuse zu Austrittskanälen 40.1, 40.2 vereinigen, welche aus dem Gehäuse 30 heraus führen.

Unten erkennbar sind die Rückspülkanäle 37.3, 37.4, die von der zentralen Bohrung für das Siebträgerelement 10 ausgehend aus dem Gehäuse 30 heraus führen. Diese sind in der in Figur 2 gezeigten Stellung nur angedeutet, und es besteht hierbei keine Verbindung zwischen den Rückspülkanälen 37.3, 37.4 und den Siebräumen 11.1, 11.2.

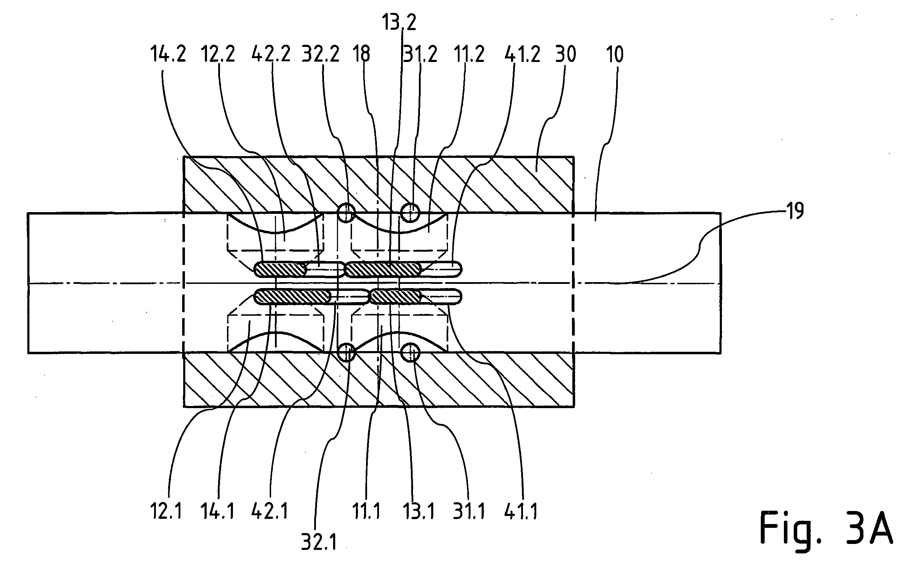

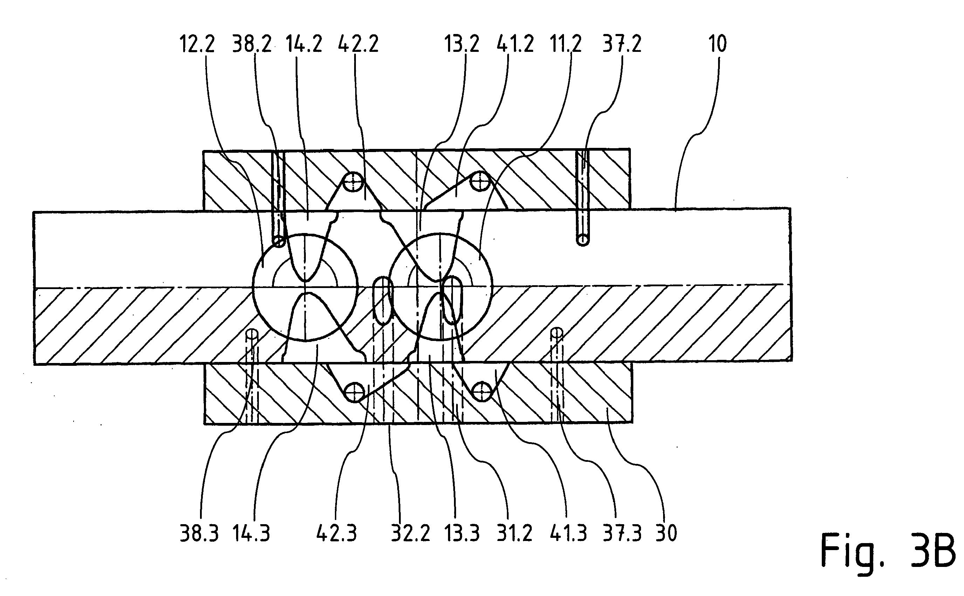

Figur 3A und 3B zeigen in jeweils gleichartigen Darstellungen wie in den Figuren 1A und 1B eine Filtriervorrichtung 100, bei der das Siebträgerelement 10 entlang seiner Längsachse 19 gegenüber dem Gehäuse 30 verschoben wurde, um eine Rückspülstellung einzunehmen.

In Figur 3A sind die Zwischenkanäle 13.1, 13.2, 14.1, 14.2 auf dem Siebträgerelement 10 schraffiert dargestellt, um sie von den gehäuseseitigen Austrittskanälen 41.1, 41.2, 42.1, 42.2 unterscheidbar zu machen.

Die Verbindung zu den einzelnen Siebräumen 11.1, 11.2, 12.1, 12.2 ist im Einzelnen wie folgt gegeben:
Der in Figur 3A obere linke Siebraum 12.2 besitzt keine Verbindung zum Eintrittskanal 32.2 mehr auf der Schmutzseite. Auf der Reinseite besteht eine knappe Überschneidung des Zwischenkanals 14.2 mit dem Austrittskanal 42.2.

Wie die um 90° versetzte Schnittebene in Figur 3B zeigt, besteht zudem eine Überschneidung des oberen hinteren Rückspülkanals 38.2 mit der Schmutzseite der Siebstelle 12.2. Außerdem besteht eine Überschneidung des auch mit der Siebstelle 12.2 in Verbindung stehenden Zwischenkanals 14.3 an der Unterseite des Siebträgerelements 10 mit dem Austrittskanal 42.3 unten im Gehäuse. Somit kann Fluid über die Austrittskanäle 42.2, 42.3 von hinten durch die Siebstelle 12.2 geleitet werden, um Verschmutzungen zu lösen, die an dem Filterelement in der Siebstelle 12.2 anhaften, und kann diese durch den Rückspülkanal 39.2 auszutragen.

Bei den in Figur 3A rechten Siebräumen 11.1, 11.2 besteht jeweils eine Verbindung zu allen Eintrittskanälen 31.1, 31.2, 32.1, 32.2 zugleich. Auch besteht eine Überschneidung der Zwischenkanäle 13.1, 13.2 mit den Gehäuse-Austrittskanälen 41.1, 41.2. Dadurch kann mit diesen beiden Siebräumen 11.1, 11.2 der Produktionsbetrieb während der Rückspülung der anderen Siebräume aufrecht erhalten werden.

In Figur 3B wiederum ist in Bezug auf den rechten Siebraum 11.2 erkennbar, dass dessen Zwischenkanäle 13.2, 13.3 nur in Überschneidung mit den rechten Austrittskanälen 41.2, 41.3 stehen, aber dass keine Verbindung zu den linken Austrittskanälen 42.2, 42.3 besteht.

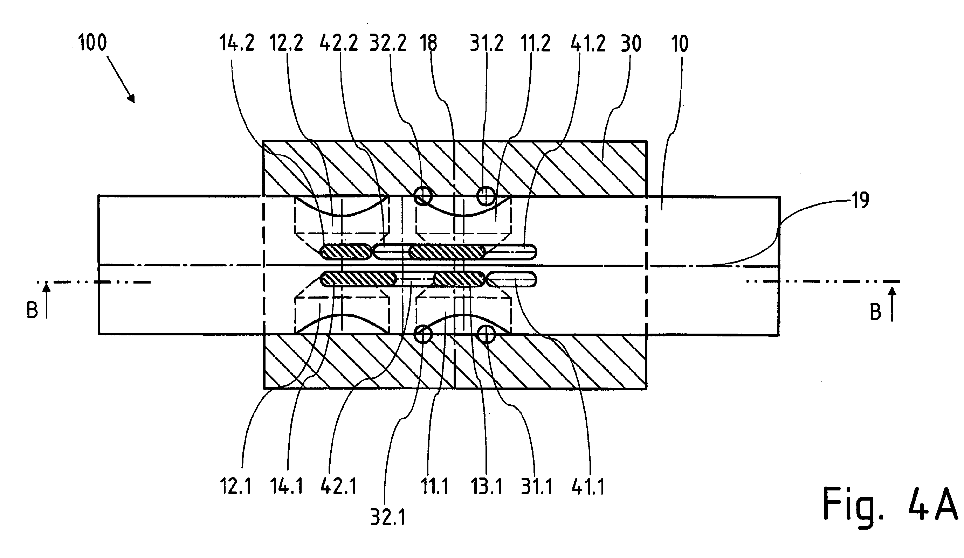

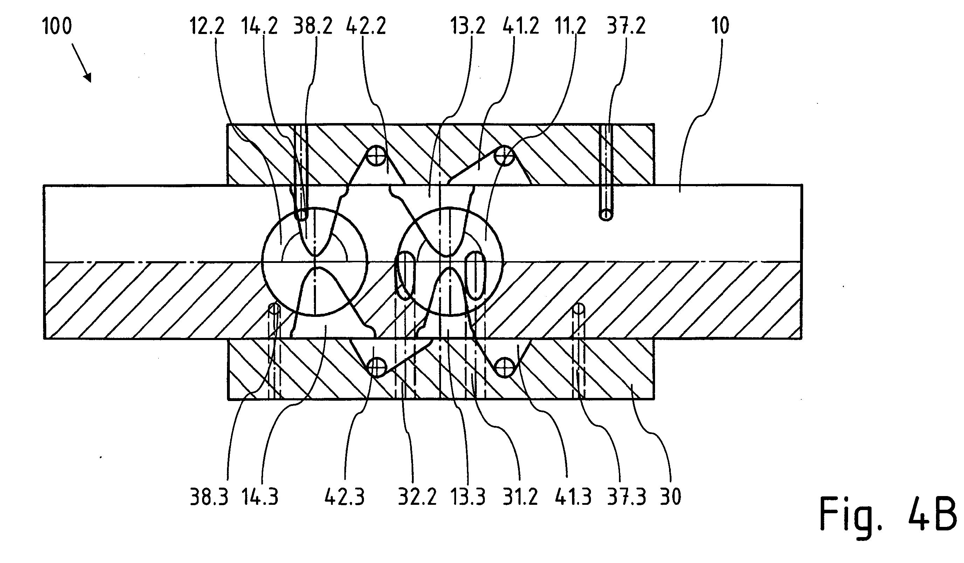

In den Figuren 4A und 4B ist das Siebträgerelement 10 gegenüber den Figuren 3A, 3B noch weiter aus dem Gehäuse 30 herausgeschoben, so dass die Verbindung vom Austrittskanal 42.2 über den Zwischenkanal 14.3 zum Siebraum 12.2 gerade unterbrochen ist. Es wird kein Fluid mehr in den Siebraum 12.2 eingespeist.

Wie die zugehörige Figur 4B zeigt, besteht in dieser Stellung auf der Schmutzseite noch die Verbindung zum Rückspülkanal 39.2.Die beiden rechten Siebräume 11.1, 11.2 sind weiterhin in Produktion. Das Fluid kann zum Beispiel bei dem in Figur 4B rechts gezeigten Siebraum 11.2 nach oben hin über den langen Zwischenkanal 13.2 in zwei Austrittskanäle 41.2, 42.2 abfließen und über den kurzen Zwischenkanal 13.3 an der Unterseite zum Austrittskanal 42.3.

Wird das Siebträgerelement 10 noch weiter nach links aus dem Gehäuse geschoben, so gelangt der in Figur 4A untere linke Siebraum 12.1 in seine hier nicht gesondert gezeigte Rückspülstellung. Der obere linke Siebraum 12.2 ist dann ohne Funktion, während auch in der zweiten Rückspülstellung die Produktion über die beiden rechten Siebräume 11.1, 11.2 aufrecht erhalten bleibt.

Um die Filterelemente austauschen oder mechanisch reinigen zu können, kann das Siebträgerelement 10 in eine sogenannte Siebwechselstellung verschoben werden, die in Figur 5 gezeigt ist. Die beiden linken Siebstellen 12.1, 12.2 liegen hierbei frei zugänglich außerhalb des Gehäuses 30.

Weder bestehen Überschneidungen der Siebräume 11.1, 11.2 mit den Eintrittskanälen 31.1, 31.2, 32.1, 32.2 noch der Zwischenkanäle 13.1, 13.2, 14.1, 14.2 mit den Austrittskanälen 41.1, 41.2, 42.1, 42.2. Der Produktionsbetrieb ist daher für diesen Siebträger 10 vollständig unterbrochen, während er für den in einer anderen Ebene angeordneten, hier nicht gezeigten weiteren Siebträger unvermindert über dessen wenigstens zwei Siebstellen aufrecht erhalten werden kann. Daher kann bei dieser ersten Ausführungsform nach den Figuren 1A bis 5 die Produktion in allen Wartungsstellungen für Rückspülung oder Siebwechsel über mindestens 50% der Gesamtfilterfläche weiter geführt werden.

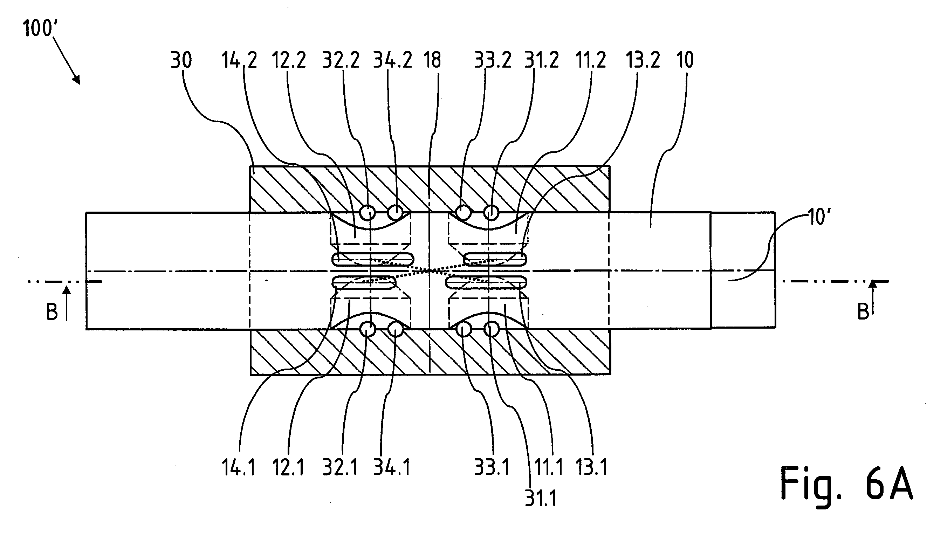

Eine zweite Ausführungsform einer Filtriervorrichtung 100' gemäß der Erfindung ist in den Figuren 6A bis 8B dargestellt. Die Anordnung der Schnittebenen ist gleichartig zur Darstellung der ersten Ausführungsform. Auch sind gleichartige Merkmale der Filtriervorrichtung 100' mit gleichen Bezugszeichen bezeichnet.

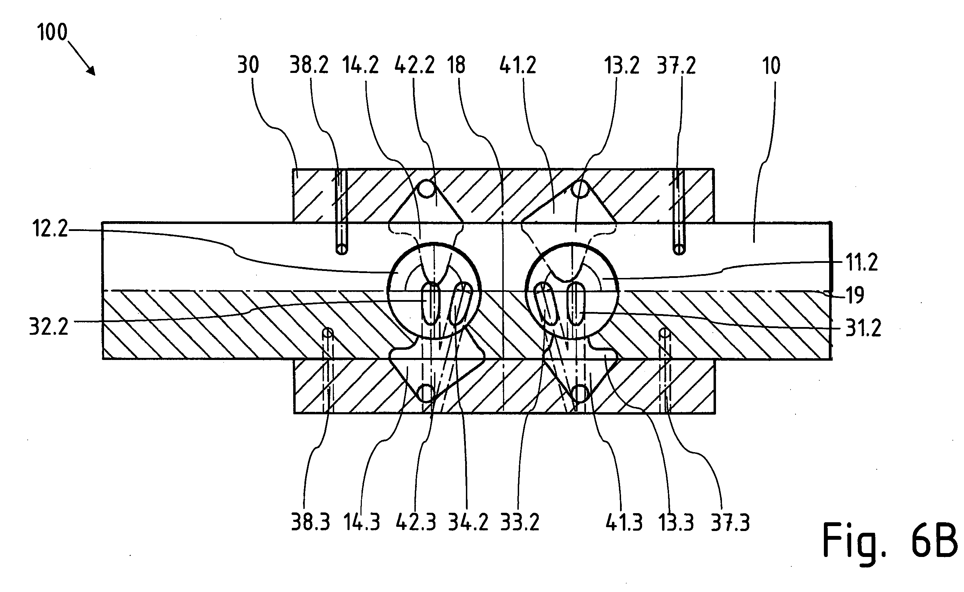

In den Figuren 6A und 6B befindet sich die Filtriervorrichtung 100' mit dem oberen Siebträgerelement 10 in der Produktionsstellung, bei der alle Siebräume 11.1, 11.2, 12.1, 12.2 zugleich von Fluid durchströmt werden.

Das Siebträgerelement 10 besitzt, wie beim ersten Ausführungsbeispiel auch, zwei Paare von Siebräumen 11.1, 11.2 bzw. 12.1, 12.2, die sich spiegelbildlich in Bezug auf die Längsachse 19 gegenüber liegen. Die Paare von Siebräumen 11.1, 11.2 bzw. 12.1, 12.2 wiederum sind spiegelbildlich in Bezug auf eine Querachse 18 angeordnet.

Am Siebträgerelement 10 selbst sind oberhalb jedes Siebraums 11.1, 11.2, 12.1, 12.2 Zwischenkanäle 13.1, 13.2, 14.1, 14.2 ausgebildet, die sich länglich in Richtung der Längsachse 19 ausdehnen. Auch bei dieser Ausführungsform einer Filtriervorrichtung 100' sind wieder alternierend je ein längerer Zwischenkanal 13.2, 14.1 und ein kürzerer Zwischenkanal 13.1, 14.2 vorgesehen, über welche Zwischenkanäle eine Verbindung mit den gehäuseseitigen Austrittskanälen herstellbar ist. Wie in der Darstellung der ersten Ausführungsform 100 in Figur 1A auch, so besitzen die Austrittskanäle die gleiche Querschnittsform wie die Zwischenkanäle 13.1, 13.2, 14.1, 14.2 und liegen in der Produktionsstellung in Figur 6A deckungsgleich genau oberhalb davon, so dass sie in Figur 6A nicht erkennbar sind.

Unterschiedlich bei der zweiten Ausführungsform einer Filtriervorrichtung 100' ist die Ausbildung und Anordnung der Eintrittskanäle.

Die Schnittansicht gemäß Figur 6A zeigt jeweils zwei Eintrittskanäle 31.1, 33.1, 31.2, 33.2, 32.1, 34.1, 32.2, 34.2 die tangential auf jeden der Siebräume 11.1, 11.2, 12.1, 12.2 zulaufen.

Die oberhalb und unterhalb der Längsachse angeordneten Kanäle liegen sich dabei direkt gegenüber, um die Entstehung von auf das Siebträgerelement 10 wirkenden Drehmomenten zu vermeiden. In Bezug auf die Querachse 18 gibt es wiederum Paare von Eintrittskanälen, die zur Querachse 18 jeweils den gleichen Abstand haben.

In der in Figur 6A gezeigten Produktionsstellung münden die Enden der beiden Eintrittskanäle 31.1, 33.1, 31.2, 33.2, 32.1, 34.1, 32.2, 34.2 jedes Siebraums 11.1, 11.2, 12.1, 12.2 in diesem.

Die andere Schnittdarstellung gemäß Figur 6B zeigt den besonderen Verlauf der gegenüber der ersten Ausführungsform hinzugetretenen zusätzlichen, innen liegenden Eintrittskanäle 33.2, 34.2. Voneinem gemeinsamen Verzeigungspunkt in oder am Gehäuse 30 verzweigen die Paare von Eintrittskanäle 31.2, 33.2 und 32.2, 34.2 V-förmig in einem Winkel von etwa 15°. Diese Form ist einfach zu fertigen, jedoch sind auch andere Verläufe der beiden Eintrittskanäle denkbar.

Für die Produktionsstellung gemäß den Figuren 6A und 6B ergibt sich durch die zusätzlichen Eintrittskanäle 33.1, 33.2, 34.1, 34.2 eine Verdoppelung des Strömungsquerschnitts, darüber hinaus aber keine besondere Funktion.

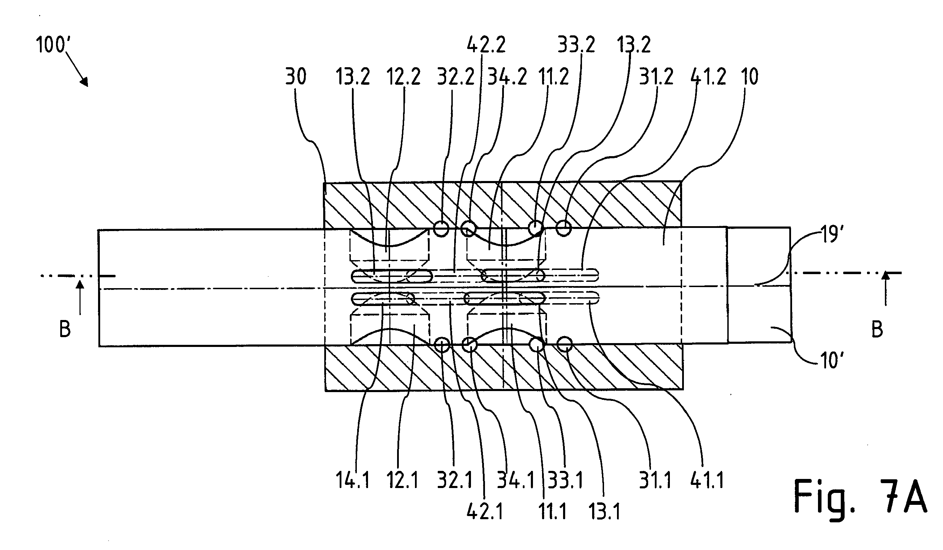

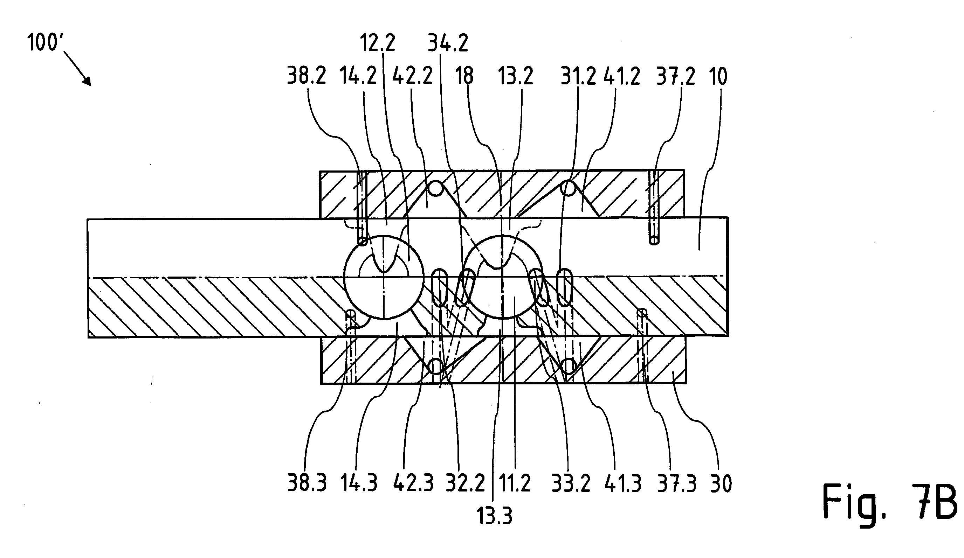

Die Figuren 7a und 7B zeigen die Filtriervorrichtung 100' in der Rückspülstellung. Hierzu ist das Siebträgerelement 10 entlang seiner Längsachse nach links verschoben. Darunter liegend ist ein weiteres Siebträgerelement 10', das sich in Produktionsstellung befindet, in demselben Gehäuse 30 erkennbar.

Die Fließwege sind nun wie folgt:
Keine Verbindung zu irgendeinem der Siebräume besteht mehr von äußeren Eintrittskanälen 31.1, 31.2 bzw. 32.1, 32.2. Diese laufen auf die Mantelfläche des Siebträgerelements 10 und sind damit abgesperrt, wie insbesondere auch in Figur 7B sichtbar ist.

Bei den beiden rechten Siebräumen 11.1, 11.2 besteht eine Verbindung mit den Eintrittskanälen 33.1, 34.1 bzw. 33.2, 34.2, so dass Fluid in die Siebräume 11.1, 11.2 gelangen kann.

Auf der Reinseite der Siebelemente besteht, wie insbesondere in der Draufsicht der Figur 7A, wie auch der seitlichen Schnittansicht der Figur 7B erkennbar, eine partielle Überschneidung zwischen den Zwischenkanälen 13.1, 13.2, 13.3 des Siebträgerelements 10 mit den Austrittskanälen 41.1, 41.2, 42.2 im Gehäuse 30. Das Fluid kann hierüber abfließen, so dass ein Produktionsbetrieb über die in den Figuren 7A und 7B jeweils rechts liegenden Siebräume 11.1, 11.2 aufrechterhalten bleibt.

Hingegen sind die jeweils links liegenden Siebräume 12.1, 12.2 auf der Eintrittsseite abgesperrt, wie gerade aus Figur 7B deutlich wird. In Figur 7B ist auch sichtbar, dass in dieser Wartungsstellung des Siebträgerelements 10 der linke Siebraum 12.2 mit dem Rückspülkanal 38.2 in Verbindung steht. Bei dem auf der Längsachse 19 gegenüberliegenden, linken Siebraum 12.1 (vgl. Fig. 7A) hingegen besteht noch keine Verbindung zu dem zugehörigen Rückspülkanal 38.3. Diese wird erst hergestellt, wenn das Siebträgerelement 10 noch weiter nach links verfahren ist.

Die Rückspülkanäle 37.2, 37.3, die in Figur 7B auf der rechten Seite des Gehäuses 30 erkennbar sind, sind für die Rückspülung der jeweils rechten Siebräume vorgesehen, wozu das Siebträgerelement 10 nach rechts zu verfahren ist. Die sukzessive Rückspülung der Siebräume an verschiedenen axialen Positionen ist vorteilhaft, weil dann der ausgangsseitig anstehende Fluiddruck konzentriert auf nur ein Filterelement in einem Siebraum wirken kann und weil dem Produktionsstrom weniger Volumen pro Zeit entzogen wird, als wenn beide benachbarten Siebräume zugleich rückgespült würden.

Der besondere Vorteil der zweiten Ausführungsform der Filtriervorrichtung 100' ist in den Figuren 8A und 8B erkennbar:
Gezeigt ist dort die sogenannten Siebwechselstellung, in welcher das Siebträgerelement 10 soweit aus dem Gehäuse heraus geschoben ist, dass die Siebräume 12.1, 12.2 außerhalb des Gehäuses 30 frei zugänglich sind, so dass die Filterelemente entnommen werden können.

In dieser Stellung bleiben bei der Filtriervorrichtung 100' gemäß der zweiten Ausführungsform die beiden rechten Siebräume 11.1, 11.2 im Produktionsbetrieb. Sie werden also weiterhin durchströmt.

Der Fließweg ergibt sich unter Bezug auf Figur 7A wie folgt: Das Fluid strömt über die Eintrittskanäle 32.1, 32.2 in die Siebräume 11.1, 11.2 und kann von dort über die Zwischenkanäle 13.1, 13.2 in die Austrittskanäle 42.1, 42.2 abfließen.

Bei einer Filtriervorrichtung 100' nach der zweiten ausführungsform, die nur ein einziges Siebträgerelement 10 besitzt, können so immerhin 50% der Filterfläche sogar während des Siebwechsels genutzt werden.

Da vorzugsweise aber Gehäuse mit zwei Gehäusebohrungen und zwei parallel darin angeordneten Siebträgerelementen 10 zum Einsatz kommen, können dann sogar 75% der wirksamen Filterfläche erhalten bleiben, wenn das eine Siebträgerelement 10' sich in Produktionsstellung befindet und gleichzeitig das andere Siebträgerelement 10 in der Siebwechselstellung gemäß Figur 8A.

Je nach Anwendungsfall sind auch andere Betriebsweisen möglich. Falls etwa der Siebwechsel an dem einen Siebträgerelement länger dauert, und die Filterelemente an dem anderen Siebträgerelement unterdessen in der Produktion stark verschmutzt worden sind, kann das unabhängig zu bedienende zweite Siebträgerelement 10' auch gleichzeitig rückgespült werden. Auch in diesem Fall, in dem sich beide Siebträgerelemente 10, 10' in einer Wartungsstellung befänden, könnte der Produktionsbetrieb über immerhin 50% der Gesamtfilterfläche weiter geführt werden.

Dies kann, wie in Figur 8B sichtbar, dadurch erreicht werden, dass der rechte Siebraum 11.2 auf der Schmutzseite noch eine Überschneidung mit dem ganz links außen liegen Eintrittskanal 32.2 besitzt, so dass Fluid einfließen kann. Der Abfluss ist währenddessen über die Zwischenkanäle 13.2, 13.3 in die Austrittskanäle 42.2, 42.3 möglich.

## Patentansprüche

1. Filtriervorrichtung (100; 100') für Fluide, mit einem Gehäuse (30) und wenigstens:
- einem verschiebbar im Gehäuse (30) gelagerten bolzenförmigen Siebträgerelement (10; 10'), das jeweils mehrere Siebräume (11.1, 11.2, 12.1, 12.2) aufweist, in welchen jeweils ein Filterelement angeordnet ist,
wobei wenigstens zwei Paare von Siebräumen (11.1, 11.2; 12.1, 12.2) an dem Siebträgerelement (10; 10') vorgesehen sind und wobei die Siebräume (11.1, 11.2, 12.1, 12.2) jedes Paares diametral gegenüberliegend am Siebträgerelement (10; 10') angeordnet sind und
- einem Eintrittskanal (31.1...34.1, 31.2...34.2) und einem Austrittskanal (41.1, 41.2, 41.3; 42.1, 42.2, 42.3) im Gehäuse (30) die in einer Produktionsstellung jeweils mit wenigstens einem Siebraum in Verbindung zu bringen sind,
wobei in einer Produktionsstellung des Siebträgerelements (10; 10') jeweils wenigstens ein Eintrittskanal (31.1...34.1, 31.2...34.2) im Gehäuse (30) zu jedem Siebraum (11.1, 11.2; 12.1, 12.2) führt und jeweils wenigstens ein Austrittskanal (41.1, 41.2, 41.3; 42.1, 42.2, 42.3) im Gehäuse (30) von jedem Siebraum (11.1, 11.2; 12.1, 12.2) weg führt,
**dadurch gekennzeichnet**,
- innerhalb des Siebträgerelements (10; 10') keine Verbindung unter den Siebräumen (11.1, 11.2, 12.1, 12.2) besteht,
- dass zwischen den Austrittskanälen (41.1, 41.2, 41.3; 42.1, 42.2, 42.3) im Gehäuse (30) und den Siebräumen (11.1, 11.2, 12.1, 12.2) jeweils wenigstens ein sich in Richtung der Längsachse (19) des Siebträgerelements (10; 10') erstreckender Zwischenkanal (13.1, 13.2, 13.3, 14.1, 14.2, 14.3) vorgesehen ist, wobei bei jedem Paar von Siebräumen (11.1, 11.2; 12.1, 12.2) mindestens zwei Zwischenkanäle (13.1, 13.2, 13.3, 14.1, 14.2, 14.3) vorgesehen sind, die in Richtung der Längsachse (19) des Siebträgerelements (10; 10') unterschiedlich lang sind und über welche:
- in einer Produktionsstellung des Siebträgerelements (10; 10') jeweils beide Siebräume (11.1, 11.2, 12.1, 12.2) eines Paares mit den Eintrittskanälen (31.1...34.1, 31.2...34.2) und den Austrittskanälen (41.1, 41.2, 41.3; 42.1, 42.2, 42.3, 42.4) verbunden sind und
- in wenigstens einer Wartungspositionen des Siebträgerelements (10; 10') im Gehäuse (30) wechselseitig eine Verbindung des einen oder des anderen Siebraums (11.1, 11.2, 12.1, 12.2) des Paars mit wenigstens einem Austrittskanal (41.1, 41.2, 41.3; 42.1, 42.2, 42.3, 42.4) herstellbar ist.

2. Filtriervorrichtung (100; 100') nach Anspruch 1, **dadurch gekennzeichnet, dass** die Zwischenkanäle (13.1, 13.2, 13.3, 14.1, 14.2, 14.3) an der äußeren Mantelfläche des Siebträgerelements (10; 10') ausgebildet sind.

3. Filtriervorrichtung (100; 100') nach Anspruch 1 oder 2, **dadurch gekennzeichnet, dass** die Zwischenkanäle (13.1, 13.2, 13.3, 14.1, 14.2, 14.3) durch langlochförmige Nuten gebildet sind.

4. Filtriervorrichtung (100; 100') nach Anspruch 1 oder 2, **dadurch gekennzeichnet, dass** die Zwischenkanäle durch Reihen von Einzelausnehmungen gebildet sind.

5. Filtriervorrichtung (100; 100') nach einem der Ansprüche 1 bis 4, **dadurch gekennzeichnet, dass** im Querschnitt
- an gegenüberliegenden Seiten des Siebträgerelements (10; 10') jeweils wenigstens ein Eintrittskanal (31.1...34.1, 31.2...34.2) zu jedem Siebraum (11.1, 11.2, 12.1, 12.2) führt, wobei die Symmetrieachse der Mündungen der Eintrittskanäle (31.1...34.1, 31.2...34.2) auf einer ersten Durchmesserlinie angeordnet ist, und
- von jedem Siebraum (11.1, 11.2, 12.1, 12.2) je zwei Austrittskanäle (41.1, 41.2, 41.3; 42.1, 42.2, 42.3) zu gegenüberliegenden Seiten des Siebträgerelements (10; 10') führen, wobei die Symmetrieachse der Mündungen der Gruppe von Austrittskanälen (41.1, 41.2, 41.3; 42.1, 42.2, 42.3) auf einer zweiten Durchmesserlinie liegt, die senkrecht zur ersten Durchmesserlinie ist.

6. Filtriervorrichtung (100; 100') nach Anspruch 5, **dadurch gekennzeichnet, dass** die Siebräume (11.1, 11.2, 12.1, 12.2) und die Eintrittskanäle (31.1...34.1, 31.2...34.2) des einen Paares in Bezug auf eine quer durch das Siebträgerelement (10; 10') verlaufende erste Querachse (18) spiegelbildlich zu den Siebräumen (11.1, 11.2, 12.1, 12.2) und Eintrittskanälen (31. 1...34. 1, 31.2...34.2) des jeweiligen anderen Paares ausgebildet sind.

7. Filtriervorrichtung (100; 100') nach Anspruch 5 oder 6, **dadurch gekennzeichnet, dass** die Mündungen von der Gruppe der zu den Siebräumen (11.1, 11.2, 12.1, 12.2) führenden Eintrittskanäle (31.1...34.1, 31.2...34.2) beider Paare spiegelsymmetrisch in Bezug auf eine erste Querachse (39) des Gehäuses (30) angeordnet sind,

8. Filtriervorrichtung (100; 100') nach Anspruch 5 oder 6, **dadurch gekennzeichnet, dass** die jeweils längeren Zwischenkanäle (13.2, 14.1) und kürzeren Zwischenkanäle (13.2, 14.1) beider Paare auf unterschiedlichen Seiten einer ersten Querachse (18) und zugleich abwechselnd auf unterschiedlichen Seiten einer Längsachse (19) des Siebträgerelements (10; 10') angeordnet sind.

9. Filtriervorrichtung (100; 100') nach einem der Ansprüche 5 bis 8, **dadurch gekennzeichnet, dass** die Verbindungslinien der Mittelpunkte der jeweils längeren Zwischenkanäle (13.2, 14.1) und der jeweils kürzeren Zwischenkanäle (13.2, 14.1) beider Paare sich im Schnittpunkt der ersten Querachse (18) und der Längsachse (19) schneiden.

10. Filtriervorrichtung (100; 100') nach wenigstens einem der vorhergehenden Ansprüche, **dadurch gekennzeichnet, dass** zwei Siebträgerelemente (10; 10') verschiebbar in dem Gehäuse (30) angeordnet sind, welche jeweils zwei Paare von sich gegenüberliegenden Siebräumen (11.1, 11.2; 12.1, 12.2) aufweisen.

11. Filtriervorrichtung (100; 100') nach wenigstens einem der vorhergehenden Ansprüche, **dadurch gekennzeichnet, dass** im Gehäuse (30) wenigstens ein Rückspülkanal (37.2, 37.3, 38.2, 38.3) vorhanden ist, der in einer Rückspül-Wartungsposition jeweils mit wenigstens einem Siebraum (11.1, 11.2; 12.1, 12.2) in Verbindung zu bringen ist.

12. Filtriervorrichtung (100') nach wenigstens einem der vorhergehenden Ansprüche, **dadurch gekennzeichnet, dass** in einer Produktionsstellung jeweils ein Paar von Eintrittskanälen (31.1...34.1, 31.2...34.2) mit jedem Siebraum (11.1, 11.2, 12.1, 12.2) in Verbindung zu bringen ist, wobei die Eintrittskanäle (31.1...34.1, 31.2...34.2) des Paares in Längsrichtung der Bohrung im Gehäuse (30) für das Siebträgerelement (10; 10') versetzt angeordnet zueinander angeordnet sind.

13. Filtriervorrichtung (100') nach Anspruch 12, **dadurch gekennzeichnet, dass** die Eintrittskanäle (31.1...34.1, 31.2...34.2) jedes Paares V-förmig abgespreizt voneinander sind.

## Claims

1. Filtration device (100; 100') for fluids, having a housing (30) and at least:
- one bolt-shaped screen carrier element (10; 10') which is mounted displaceably in the housing (30) and each of which has multiple screen spaces (11.1, 11.2, 12.1, 12.2) in each of which there is arranged one filter element,
wherein at least two pairs of screen spaces (11.1, 11.2; 12.1, 12.2) are arranged on the screen carrier element (10; 10') and wherein the screen spaces (11.1, 11.2, 12.1, 12.2) of each pair are arranged diametrically opposite on the screen carrier element (10; 10'), and
- one inlet duct (31.1 ... 34.1, 31.2 ... 34.2) and one outlet duct (41.1, 41.2, 41.3; 42.1, 42.2, 42.3) in the housing (30) which, in a production position, are each to be brought into connection with at least one screen space,
wherein, in a production position of the screen carrier element (10; 10'), in each case at least one inlet duct (31.1 ... 34.1, 31.2 ... 34.2) in the housing (30) leads to each screen space (11.1, 11.2; 12.1, 12.2) and in each case at least one outlet duct (41.1, 41.2, 41.3; 42.1, 42.2, 42.3) in the housing (30) leads away from each screen space (11.1, 11.2; 12.1, 12.2),
**characterized**
- **in that** within the screen carrier element (10; 10') there is no connection between the screen spaces (11.1, 11.2, 12.1, 12.2),
- **in that** there is provided, between the outlet ducts (41.1, 41.2, 41.3; 42.1, 42.2, 42.3) in the housing (30) and the screen spaces (11.1, 11.2, 12.1, 12.2), in each case at least one intermediate duct (13.1, 13.2, 13.3, 14.1, 14.2, 14.3) which extends in the direction of the longitudinal axis (19) of the screen carrier element (10; 10'), wherein for each pair of screen spaces (11.1, 11.2; 12.1, 12.2) there are provided at least two intermediate ducts (13.1, 13.2, 13.3, 14.1, 14.2, 14.3) which are of different lengths in the direction of the longitudinal axis (19) of the screen carrier element (10; 10') and via which:
- in a production position of the screen carrier element (10; 10') both screen spaces (11.1, 11.2, 12.1, 12.2) of each pair are connected to the inlet ducts (31.1 ... 34.1, 31.2 ... 34.2) and the outlet ducts (41.1, 41.2, 41.3; 42.1, 42.2, 42.3, 42.4) and
- in at least one maintenance position(s) of the screen carrier element (10; 10') in the housing (30) a connection can be established on alternating sides between one or other of the screen spaces (11.1, 11.2, 12.1, 12.2) of the pair and at least one outlet duct (41.1, 41.2, 41.3; 42.1, 42.2, 42.3, 42.4).

2. Filtration device (100; 100') according to Claim 1, **characterized in that** the intermediate ducts (13.1, 13.2, 13.3, 14.1, 14.2, 14.3) are formed on the external lateral face of the screen carrier element (10; 10').

3. Filtration device (100; 100') according to Claim 1 or 2, **characterized in that** the intermediate ducts (13.1, 13.2, 13.3, 14.1, 14.2, 14.3) are formed by slotted grooves.

4. Filtration device (100; 100') according to Claim 1 or 2, **characterized in that** the intermediate ducts are formed by rows of individual cutouts.

5. Filtration device (100; 100') according to one of Claims 1 to 4, **characterized in that** in cross section
- on opposite sides of the screen carrier element (10; 10') in each case at least one inlet duct (31.1 ... 34.1, 31.2 ... 34.2) leads to each screen space (11.1, 11.2, 12.1, 12.2), wherein the axis of symmetry of the mouths of the inlet ducts (31.1 ... 34.1, 31.2 ... 34.2) is arranged on a first diameter line, and
- two outlet ducts (41.1, 41.2, 41.3; 42.1, 42.2, 42.3) lead from each screen space (11.1, 11.2, 12.1, 12.2) to opposite sides of the screen carrier element (10; 10'), wherein the axis of symmetry of the mouths of the group of outlet ducts (41.1, 41.2, 41.3; 42.1, 42.2, 42.3) lies on a second diameter line which is perpendicular to the first diameter line.

6. Filtration device (100; 100') according to Claim 5, **characterized in that** the screen spaces (11.1, 11.2, 12.1, 12.2) and the inlet ducts (31.1 ... 34.1, 31.2 ... 34.2) of one pair are formed as a mirror image of the screen spaces (11.1, 11.2, 12.1, 12.2) and the inlet ducts (31.1 ... 34.1, 31.2 ... 34.2) of the respective other pair, with respect to a first transverse axis (18) running transversely through the screen carrier element (10; 10').

7. Filtration device (100; 100') according to Claim 5 or 6, **characterized in that** the mouths of the group of inlet ducts (31.1 ... 34.1, 31.2 ... 34.2) leading to the screen spaces (11.1, 11.2, 12.1, 12.2) of the two pairs are arranged symmetrically in mirror image with respect to a first transverse axis (39) of the housing (30).

8. Filtration device (100; 100') according to Claim 5 or 6, **characterized in that** the respectively longer intermediate ducts (13.2, 14.1) and shorter intermediate ducts (13.2, 14.1) of the two pairs are arranged on different sides of first transverse axis (18) and at the same time in alternation on different sides of a longitudinal axis (19) of the screen carrier element (10; 10').

9. Filtration device (100; 100') according to one of Claims 5 to 8, **characterized in that** the connection lines of the midpoints of the respectively longer intermediate ducts (13.2, 14.1) and the respectively shorter intermediate ducts (13.2, 14.1) of the two pairs intersect at the point of intersection of the first transverse axis (18) and the longitudinal axis (19).

10. Filtration device (100; 100') according to at least one of the preceding claims, **characterized in that** two screen carrier elements (10; 10') are arranged displaceably in the housing (30), and each has two pairs of mutually opposite screen spaces (11.1, 11.2; 12.1, 12.2).

11. Filtration device (100; 100') according to at least one of the preceding claims, **characterized in that** in the housing (30) there is at least one backflushing duct (37.2, 37.3, 38.2, 38.3) which, in a backflushing maintenance position, is to be connected in each case to at least one screen space (11.1, 11.2; 12.1, 12.2).

12. Filtration device (100') according to at least one of the preceding claims, **characterized in that**, in a production position, in each case one pair of inlet ducts (31.1 ... 34.1, 31.2 ... 34.2) is to be connected to each screen space (11.1, 11.2, 12.1, 12.2), wherein the inlet ducts (31.1 ... 34.1, 31.2 ... 34.2) of the pair are arranged offset with respect to one another in the longitudinal direction of the bore in the housing (30) for the screen carrier element (10; 10').

13. Filtration device (100') according to Claim 12, **characterized in that** the inlet ducts (31.1 ... 34.1, 31.2 ... 34.2) of each pair are spread apart from one another in the shape of a V.

## Revendications

1. Dispositif de filtrage (100 ; 100') pour fluides, comprenant un boîtier (30) et au moins :
- un élément de support de tamis en forme de goujon (10 ; 10') supporté de manière déplaçable dans le boîtier (30), qui présente à chaque fois plusieurs espaces de tamis (11.1, 11.2, 12.1, 12.2), dans lesquels est disposé à chaque fois un élément de filtre,
au moins deux paires d'espace de tamis (11.1, 11.2 ; 12.1, 12.2) étant prévues au niveau de l'élément de support de tamis (10 ; 10') et les espaces de tamis (11.1, 11.2, 12.1, 12.2) de chaque paire étant disposés de manière diamétralement opposée sur l'élément de support de tamis (10 ; 10'), et
- un canal d'entrée (31.1 ... 34.1, 31.2 ... 34.2) et un canal de sortie (41.1, 41.2, 41.3 ; 42.1, 42.2, 42.3) dans le boîtier (30), lesquels doivent être mis en liaison à chaque fois avec au moins un espace de tamis dans une position de production,
à chaque fois au moins un canal d'entrée (31.1 ... 34.1, 31.2 ... 34.2) dans le boîtier (30) conduisant, dans une position de production de l'élément de support de tamis (10 ; 10'), à chaque espace de tamis (11.1, 11.2 ; 12.1, 12.2) et à chaque fois au moins un canal de sortie (41.1, 41.2, 41.3 ; 42.1, 42.2, 42.3) dans le boîtier (30) conduisant à l'écart de chaque espace de tamis (11.1, 11.2 ; 12.1, 12.2),
**caractérisé en ce**
- **qu'**à l'intérieur de l'élément de support de tamis (10 ; 10') n'existe aucune connexion sous les espaces de tamis (11.1, 11.2 ; 12.1, 12.2),
- **qu'**entre les canaux de sortie (41.1, 41.2, 41.3 ; 42.1, 42.2, 42.3) dans le boîtier (30) et les espaces de tamis (11.1, 11.2 ; 12.1, 12.2) est à chaque fois prévu au moins un canal intermédiaire (13.1, 13.2, 13.3, 14.1, 14.2, 14.3) s'étendant dans la direction de l'axe longitudinal (19) de l'élément de support de tamis (10 ; 10'), au moins deux canaux intermédiaires (13.1, 13.2, 13.3, 14.1, 14.2, 14.3) étant prévus pour chaque paire d'espaces de tamis (11.1, 11.2 ; 12.1, 12.2), lesquels ont des longueurs différentes dans la direction de l'axe longitudinal (19) de l'élément de support de tamis (10 ; 10') et par le biais desquels :
- dans une position de production de l'élément de support de tamis (10 ; 10'), à chaque fois deux espaces de tamis (11.1, 11.2 ; 12.1, 12.2) d'une paire sont connectés aux canaux d'entrée (31.1 ... 34.1, 31.2 ... 34.2) et aux canaux de sortie (41.1, 41.2, 41.3 ; 42.1, 42.2, 42.3, 42.4) et
- dans au moins une position d'attente de l'élément de support de tamis (10 ; 10') dans le boîtier (30), une liaison de l'un ou de l'autre espace de tamis (11.1, 11.2 ; 12.1, 12.2) de la paire pouvant être établie en alternance à au moins un canal de sortie (41.1, 41.2, 41.3 ; 42.1, 42.2, 42.3, 42.4).

2. Dispositif de filtration (100 ; 100') selon la revendication 1, **caractérisé en ce que** les canaux intermédiaires (13.1, 13.2, 13.3, 14.1, 14.2, 14.3) sont réalisés au niveau de la surface d'enveloppe extérieure de l'élément de support de tamis (10 ; 10').

3. Dispositif de filtration (100 ; 100') selon la revendication 1 ou 2, **caractérisé en ce que** les canaux intermédiaires (13.1, 13.2, 13.3, 14.1, 14.2, 14.3) sont formés par des rainures en forme de trou oblong.

4. Dispositif de filtration (100 ; 100') selon la revendication 1 ou 2, **caractérisé en ce que** les canaux intermédiaires sont formés par des rangées d'évidements discrets.

5. Dispositif de filtration (100 ; 100') selon l'une quelconque des revendications 1 à 4, **caractérisé en ce qu'**en section transversale
- au niveau de côtés opposés de l'élément de support de tamis (10 ; 10'), à chaque fois au moins un canal d'entrée (31.1 ... 34.1, 31.2 ... 34.2) conduit à chaque espace de tamis (11.1, 11.2 ; 12.1, 12.2), l'axe de symétrie des embouchures des canaux d'entrée (31.1 ... 34.1, 31.2 ... 34.2) étant disposé sur une première ligne de diamètre, et
- à chaque fois deux canaux de sortie (41.1, 41.2, 41.3 ; 42.1, 42.2, 42.3) conduisent depuis chaque espace de tamis (11.1, 11.2 ; 12.1, 12.2) à des côtés opposés de l'élément de support de tamis (10 ; 10'), l'axe de symétrie des embouchures du groupe de canaux de sortie (41.1, 41.2, 41.3 ; 42.1, 42.2, 42.3) étant situé sur une deuxième ligne de diamètre qui est perpendiculaire à la première ligne de diamètre.

6. Dispositif de filtration (100 ; 100') selon la revendication 5, **caractérisé en ce que** les espaces de tamis (11.1, 11.2 ; 12.1, 12.2) et les canaux d'entrée (31.1 ... 34.1, 31.2 ... 34.2) d'une paire sont réalisés, par rapport à un premier axe transversal (18) s'étendant transversalement à travers le premier élément de support de tamis (10 ; 10'), avec une symétrie spéculaire par rapport aux espaces de tamis (11.1, 11.2 ; 12.1, 12.2) et aux canaux d'entrée (31.1 ... 34.1, 31.2 ... 34.2) de l'autre paire respective.

7. Dispositif de filtration (100 ; 100') selon la revendication 5 ou 6, **caractérisé en ce que** les embouchures du groupe des canaux d'entrée (31.1 ... 34.1, 31.2 ... 34.2) des deux paires conduisant aux espaces de tamis (11.1, 11.2 ; 12.1, 12.2) sont disposées avec une symétrie spéculaire par rapport à un premier axe transversal (39) du boîtier (30).

8. Dispositif de filtration (100 ; 100') selon la revendication 5 ou 6, **caractérisé en ce que** les canaux intermédiaires à chaque fois plus longs (13.2, 14.1) et les canaux intermédiaires plus courts (13.2, 14.1) des deux paires sont disposés sur des côtés opposés d'un premier axe transversal (18) et en même temps en alternance sur des côtés opposés d'un axe longitudinal (19) de l'élément de support de tamis (10 ; 10').

9. Dispositif de filtration (100 ; 100') selon l'une quelconque des revendications 5 à 8, **caractérisé en ce que** les lignes de liaison des centres des canaux intermédiaires à chaque fois plus longs (13.2, 14.1) et des canaux intermédiaires à chaque fois plus courts (13.2, 14.1) des deux paires se coupent au point d'intersection du premier axe transversal (18) et de l'axe longitudinal (19).

10. Dispositif de filtration (100 ; 100') selon au moins l'une quelconque des revendications précédentes, **caractérisé en ce que** deux éléments de support de tamis (10 ; 10') sont disposés de manière déplaçable dans le boîtier (30), lesquels présentent à chaque fois deux paires d'espaces de tamis opposés (11.1, 11.2 ; 12.1, 12.2).

11. Dispositif de filtration (100 ; 100') selon au moins l'une quelconque des revendications précédentes, **caractérisé en ce qu'**au moins un canal de reflux (37.2, 37.3, 38.2, 38.3) est disposé dans le boîtier (30), lequel doit être amené en liaison dans une position d'attente de reflux à chaque fois avec au moins un espace de tamis (11.1, 11.2 ; 12.1, 12.2).

12. Dispositif de filtration (100') selon au moins l'une quelconque des revendications précédents, **caractérisé en ce que** dans une position de production, à chaque fois une paire de canaux d'entrée (31.1 ... 34.1, 31.2 ... 34.2) doit être amenée en liaison avec chaque espace de tamis (11.1, 11.2 ; 12.1, 12.2), les canaux d'entrée (31.1 ... 34.1, 31.2 ... 34.2) de la paire étant disposés dans la direction longitudinale de l'alésage dans le boîtier (30) pour l'élément de support de tamis (10 ; 10') de manière décalée les uns par rapport aux autres.

13. Dispositif de filtration (100') selon la revendication 12, **caractérisé en ce que** les canaux d'entrée (31.1 ... 34.1, 31.2 ... 34.2) de chaque paire sont écartés les uns des autres en forme de V.
